# EUROPÄISCHE PATENTSCHRIFT

(11) **EP 0 456 126 B1**
(45) Veröffentlichungstag und Bekanntmachung des Hinweises auf die Patenterteilung: **27.09.1995**
(21) Anmeldenummer: 91107196.7
(22) Anmeldetag: 03.05.1991
(51) Int. Cl.: G01N 21/00, D04B 35/18

(54) **Verfahren und Anordnung zur optischen Qualitätskontrolle der Nadeln von Stickmaschinen**
Method and apparatus for the optical control of the quality of needles of a knitting machine
Méthode et appareil pour le contrôle optique de la qualité des aiguilles d'une machine à tricoter

(30) Priorität: 08.05.1990 DE 4014661
(43) Veröffentlichungstag der Anmeldung: 13.11.1991
(73) Patentinhaber: Theodor Groz & Söhne & Ernst Beckert Nadelfabrik Commandit-Gesellschaft, 72458 Albstadt (DE)
(72) Erfinder: Massen, Robert, Prof. Dr., D-78315 Radolfzell (DE)
(74) Vertreter: Rüger, Rudolf, Dr.-Ing.

(56) Entgegenhaltungen:
- EP-A- 0 265 302
- DE-A- 3 814 898
- FR-A- 2 244 032
- FR-A- 2 508 170
- GB-A- 1 190 806
- US-A- 3 427 462
- PATENT ABSTRACTS OF JAPAN vol. 12, no. 43 (P-664)(2890) 09 Februar 1988, & JP-A- 62 191743

## Beschreibung

Die Erfindung betrifft ein Verfahren zur optischen Qualitätskontrolle der zur Bildung von Maschen aus einer Ruhestellung in eine Maschenbildungsstellung und wieder zurück bewegten Nadeln von Strickmaschinen sowie eine Anordnung zur Durchführung des Verfahrens.

Strickmaschinen sind schnellaufende Präzisionsmaschinen zur Fertigung von Maschenwaren, welche eine sehr große Anzahl von mechanisch schnell bewegten Präzisionsnadeln verwenden, die bei einer Flachstrickmaschine entlang einer linearen Bahn, bei einer Rundstrickmaschine in einem Kreis angeordnet sind. Die Nadeln werden zur Bildung einer Maschenreihe einzeln der Reihe nach aus ihrer Ruhestellung im Nadelbett in eine Maschenbildungsstellung und wieder zurück in die Ruhestellung bewegt. Bei mehreren tausend Nadeln pro Nadelbett liegt die Nadelbewegungsfrequenz in der Größenordnung von 10 kHz. Um die Fertigung fehlerhafter Ware zu vermeiden, müssen die dynamisch hochbeanspruchten Nadeln auf Grobfehler wie Brüche, Grobrisse und Verbiegungen überwacht werden, damit beim Auftreten eines Grobfehlers dieser Art die Strickmaschine sofort stillgesetzt wird. Solche Grobfehler treten plötzlich auf und müssen während des normalen Betriebs der Strickmaschine sofort erkannt werden.

Zur Erkennung von Grobfehlern sind optische Sensoren bekannt, welche bei voller Arbeitsgeschwindigkeit der Strickmaschine mit Hilfe einer Photodiode die Gesamtmenge des Lichtes messen, das von jeder sich in die Maschenbildungsstellung bewegenden Nadel reflektiert wird oder von der Nadel ein Schattenbild erzeugt (FR-A-2 244 032), wobei dann aus der Abweichung gegenüber vorgegebenen Toleranzwerten grobe Fehler erkannt werden können. Die Detektionssicherheit solcher Sensoren ist gering, und eine Fehlerklassifikation ist nur sehr eingeschränkt möglich. Verschleißmessungen, welche eine lokale Vermessung im µm-Bereich erfordern, sind mit solchen optischen Sensoren überhaupt nicht möglich. Für solche Verschleißmessungen sowie für das Erkennen von Feinfehlern, wie Feinrissen, mußten bisher die Nadeln aus der Strickmaschine ausgebaut und einzeln untersucht werden. Diese Untersuchung war aufwendig und bedingte lange Stillstandszeiten der Strickmaschine.

Daneben ist aus der DE-A 38 14 898 eine Anordnung zur Kontrolle von Nähmaschinennadeln bekannt, die zur Endkontrolle bei der Nadelherstellung verwendet wird und bei der die Nadeln in Haltevorrichtungen eines durch einen Antrieb taktweise bewegbaren Transportbandes eingelegt werden, das die Nadeln aufeinanderfolgend einzeln in wenigstens eine Meßstelle bringt. In der jeweiligen Meßstelle ist jeweils eine Fernsehkamera mit nachgeschaltetem Bildverarbeitungssystem auf einen definierten Auswertebereich der während der Kontrolle stillstehenden Nadel gerichtet. Das Bildverarbeitungssystem führt einen Bildvergleich zwischen dem aktuell erfaßten und einem vorgegebenen Bild durch. In Abhängigkeit von dem Auswertungsergebnis des Bildverarbeitssystems wird über eine Steuereinrichtung eine Weiche am Ende des Transportbandes angesteuert, die es erlaubt fehlerhafte Nadeln auszusortieren. Bei der Anwendung auf eine Strickmaschine würde diese Anordnung ebenfalls Stillstandszeiten der Strickmaschine bedingen. Davon abgesehen ist diese Einrichtung nicht für Verschleißmessungen an den Nadeln eingerichtet.

Aufgabe der Erfindung ist die Schaffung eines Verfahrens und einer Anordnung, die eine sofortige Erkennung von Grobfehlern der Nadeln bei voller Arbeitsgeschwindigkeit der Strickmaschine mit großer Sicherheit ermöglichen und andererseits auch für Verschleißmessungen und die Erkennung von Feinfehlern geeignet sind.

Zur Lösung dieser Aufgabe weist das Verfahren nach der Erfindung die Merkmale des Patentanspruches 1 auf.

Mit Hilfe einer Bildsensor-Kamera wird ein Prüfbild des zu überwachenden Nadelteils der jeweils aus ihrer Ruhestellung herausbewegten Nadel aufgenommen, wobei die beim Auslesen des Bildsensors erhaltenen analogen Bildsignale in digitale Bildpunktsignale umgesetzt und die digitalen Bildpunktsignale des Prüfbildes oder einzelner Prüfzonen des Prüfbildes zur Gewinnung von Informationen über den Zustand der jeweils aufgenommenen Nadel verarbeitet werden.

Verwendet werden Sensoren, wie Halbleiter-Zeilenkameras oder Halbleiter-Matrixkameras. Je nachdem, ob Grobfehler bei voller Arbeitsgeschwindigkeit erkannt oder Verschleißmessungen vorgenommen werden sollen, werden Bildsensoren mit unterschiedlich großer Auflösung benutzt. Für die Erkennung von Grobfehlern genügt eine geringe Auflösung des Bildsensors, doch ist eine hohe Bildauslese- und Verarbeitungsgeschwindigkeit von mehr als 10.000 Bildern pro Sekunde erforderlich; für Verschleißmessungen und das Erkennen von Feinfehlern ist eine hohe Auflösung des Bildsensors erforderlich, doch genügt eine niedrige Bildauslese- und Verarbeitungsgeschwindigkeit von beispielsweise 50 bis 500 Bildern pro Sekunde.

Zur kontinuierlichen Erkennung von Grobfehlern, wie Brüchen, Grobrissen und Verbiegungen der Nadeln, werden die Prüfbilder während des Betriebs der Strickmaschine mit grober Bildauflösung mit der Nadelfrequenz oder einem Teiler der Nadelfrequenz aufgenommen. Die digitalen Bildpunktsignale des Prüfbildes bzw. der Prüfzonen des Prüfbildes können im Rhythmus der Bildpunktfrequenz mit den Bildpunktsignalen wenigstens eines gespeicherten Referenzbildes verglichen werden, wobei aufgrund jedes Vergleichs ein quantitatives Ähnlichkeitsmaß gebildet und ein Alarmsignal erzeugt wird, wenn das Ähnlichkeitsmaß eine vorgegebene Toleranzschwelle nicht erreicht.

Zur gelegentlichen Bestimmung der Verschleißdaten und von sich allmählich entwickelnden Feinfehlern, wie Feinrissen, werden die Prübilder mit hoher Bildauflösung aufgenommen. Die digitalen Bildpunktsignale der Prüfbilder bzw. der Prüfzonen werden gespeichert, und die gespeicherten Bildpunktsignale werden zur Bestimmung geometrischer Abmessungen der Nadeln und/oder zur Bestimmung von Oberflächenmerkmalen der sichtbaren Nadeloberflächen ausgewertet.

Eine Anordnung zur optischen Qualitätskontrolle der Nadeln von Strickmaschinen weist erfindungsgemäß die Merkmale des Patentanspruches 8 auf.

Sie verfügt über eine Bildsensor-Kamera mit einer Optik und wenigstens einem Bildsensor, die so an der Strickmaschine angeordnet ist, daß die Optik den zu überwachenden Teil der sich jeweils in die Maschenbildungsstellung bewegenden Nadel auf den bzw. jeden Bildsensor abbildet. Eine Auslösevorrichtung löst die Aufnahme eines Prüfbildes des zu überwachenden Nadelteils und das Auslesen des Bildsensors aus, wenn die Nadel eine vorbestimmte, für alle Nadeln gleiche Stellung erreicht. Ein an den Ausgang des bzw. jedes Bildsensors angeschlossener Analog/Digital-Umsetzer bewirkt die Umsetzung der vom Bildsensor gelieferten analogen Bildsignale in digitale Bildpunktsignale, und durch eine an den Ausgang des Analog/Digital-Umsetzers angeschlossene Signalverarbeitungsschaltung, werden die gespeicherten Bildpunktsignale zur Gewinnung von Informationen über den Zustand der jeweils aufgenommenen Nadel verarbeitet.

Vorteilhafte Ausgestaltungen und Weiterbildungen des Verfahrens und der Anordnung nach der Erfindung sind in den Unteransprüchen gekennzeichnet.

Weitere Merkmale und Vorteile der Erfindung ergeben sich aus der folgenden Beschreibung eines Ausführungsbeispiels anhand der Zeichnung. In der Zeichnung zeigen:
- Fig. 1: die Seitenansicht des oberen Teils einer Zungennadel einer Strickmaschine, wobei die Zonen, in welchen häufig Grobfehler auftreten, schraffiert sind,
- Fig. 2: die Zungennadel von Fig. 1, wobei die Zonen, in denen häufig Verschleißerscheinungen und Feinrisse auftreten, schraffiert sind,
- Fig. 3: schematisch eine Bildsensor-Kamera für die optische Qualitätskontrolle der Nadeln einer Strickmaschine,
- Fig. 4: das Blockschaltbild einer Anordnung zur Überwachung der Nadeln einer Strickmaschine auf das Auftreten von Grobfehlern mit Hilfe der Bildsensor-Kamera von Fig. 3,
- Fig. 5: das Blockschaltbild einer abgeänderten Ausführungsform der Anordnung von Fig. 4 und
- Fig. 6: das Blockschaltbild einer Anordnung zur Durchführung von Verschleißmessungen und zur Feststellung von Feinfehlern an den Nadeln einer Strickmaschine mit Hilfe der Bildsensor-Kamera von Fig. 3.

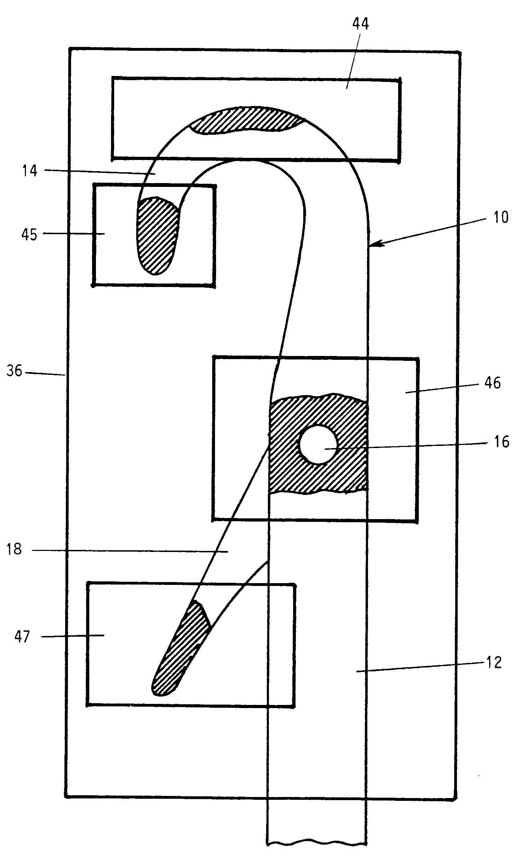

Fig. 1 zeigt den oberen Teil einer Nadel 10 einer Strickmaschine, wobei als Beispiel eine typische Zungennadel mit einem Schaft 12, einem Hakenkopf 14 und einer am Schaft 12 mittels eines Niets 16 schwenkbar gelagerten Zunge 18 dargestellt ist. Die Zonen, in welchen häufig Grobfehler, wie Brüche, Grobrisse und Verbiegungen auftreten, sind schraffiert. Diese Zonen liegen im oberen Teil und an der Spitze des Hakenkopfs 14, in dem zur Aufnahme des Niets 16 durchbrochenen Bereich des Schafts 12 und am freien Ende der Zunge 18. Eine gebrochene oder verbogene Nadel verursacht Laufmaschen und ähnliche Fehler; der Grobfehler muß daher bei - voller Arbeitsgeschwindigkeit sofort erkannt werden, damit die Strickmaschine unverzüglich stillgesetzt werden kann, um die Fertigung fehlerhafter Ware zu vermeiden. Ferner muß die fehlerhafte Nadel identifiziert und die Art des Fehlers klassifiziert werden, damit der Fehler möglichst schnell behoben werden kann. Bei der optischen Überwachung der Nadeln auf das Auftreten solcher Grobfehler kann die Tatsache ausgenutzt werden, daß sich die Form der fehlerhaften Nadel infolge des Grobfehlers plötzlich beträchtlich verändert.

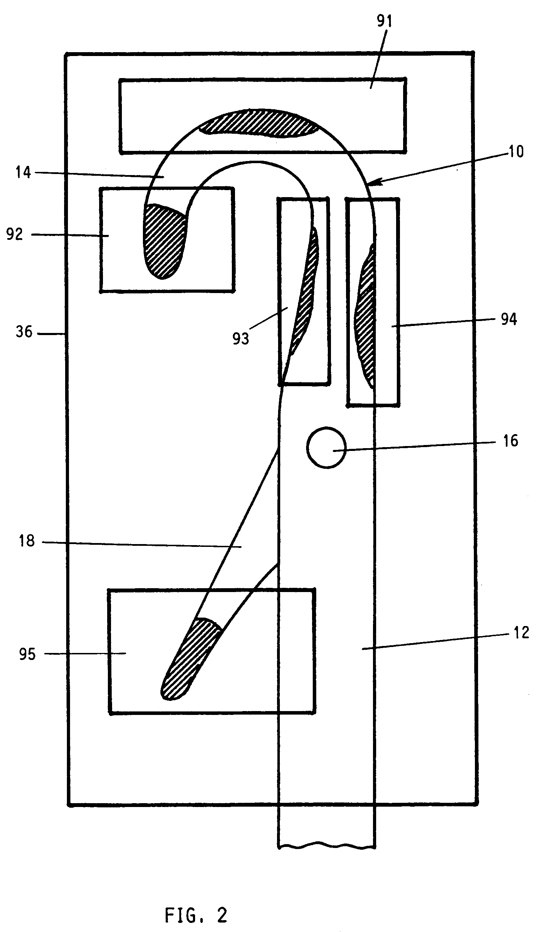

Fig. 2 zeigt die gleiche Nadel wie in Fig. 1, wobei als Beispiel einige Zonen schraffiert sind, die besonders anfällig für Verschleiß und für das Auftreten von Feinrissen und anderen Feinfehlern sind. Diese Zonen fallen zum Teil mit den in Fig. 1 dargestellten kritischen Grobfehlerzonen zusammen. Verschleißfehler und Feinrisse treten allmählich auf und entwickeln sich langsam; sie sind daher wesentlich schwieriger als Grobfehler zu erkennen, da sie die Form der Nadeln nur sehr geringfügig und langsam verändern. Andererseits beeinträchtigen Verschleißfehler und Feinrisse die Fertigungsqualität der Ware zunächst kaum. Es ist daher nicht erforderlich, die Nadeln während des normalen Betriebs bei voller Arbeitsgeschwindigkeit dauernd auf Verschleißerscheinungen und Feinfehler zu überwachen; vielmehr genügt es, an den Nadeln in größeren Zeitabständen während besonderer Inspektionszeiten Verschleißmessungen und Prüfungen auf Feinfehler vorzunehmen, vorzugsweise bei langsam laufender Maschine.

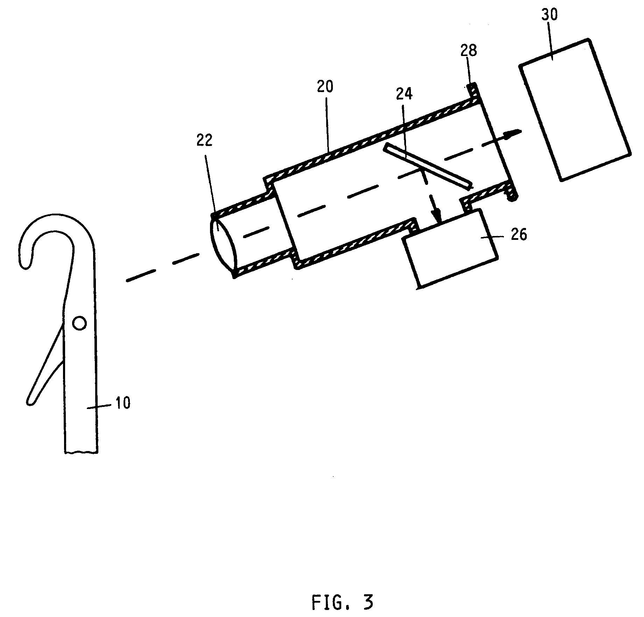

Fig. 3 zeigt schematisch eine Bildsensor-Kamera 20, die sowohl zur ständigen Überwachung der Nadeln auf das Auftreten von Grobfehlern bei voller Arbeitsgeschwindigkeit als auch zur periodischen Feststellung von Verschleißerscheinungen und Feinrissen in größeren Zeitabständen dient. Die Kamera 20 enthält eine Optik 22, mit deren Hilfe ein Bild der Nadel 10 aufgenommen wird, und einen im Strahlengang der Optik 22 angeordneten Strahlenteiler 24, der durch einen halbdurchlässigen Spiegel oder ein Teilerprisma gebildet sein kann. Der am Strahlenteiler reflektierte Strahlengang wird auf einen grobauflösenden Bildsensor 26 gerichtet, der für die ständige Überwachung der Nadeln auf Grobfehler dient. Der vom Strahlenteiler 24 durchgelassene Strahlengang führt zu dem mit einem Flansch 28 versehenen Ausgang der Kamera 20. An dem Flansch 28 wird im Inspektionsfall ein hochauflösender Bildsensor 30 angebracht, der für die Vermessung von Verschleißerscheinungen und die Feststellung von anderen Feinfehlern, wie Feinrissen, dient.

Die Kamera 20 wird an der Strickmaschine so angebracht, daß sich jeweils die Nadel, die zur Maschenbildung bewegt wird, an der Bildaufnahmestelle befindet und somit in jedem Zyklus der Reihe nach die Bilder aller Nadeln aufgenommen werden. Dies läßt sich bei einer Rundstrickmaschine mit rotierendem Nadelbett auf besonders einfache Weise erreichen, weil bei dieser die Maschenbildung stets an der gleichen Stelle erfolgt, an die die Nadeln der Reihe nach gebracht werden. Die Kamera kann daher fest angebracht und auf die Maschenbildungsstelle eingestellt werden. Bei Flachstrickmaschinen muß dagegen entweder die Kamera relativ zum Nadelbett bewegt werden oder das Bild der jeweils bewegten Nadel mittels eines Systems aus beweglichen Umlenkspiegeln oder dergleichen zu einer ortsfest angebrachten Kamera übertragen werden.

Wenn die Kamera 20 bei jeder Bildung einer Maschenreihe nacheinander alle Nadeln aufnimmt, arbeitet sie mit der vollen Nadelfrequenz; bei einer Nadelfrequenz von 10 kHz liefert sie 10.000 Bilder pro Sekunde. Es ist auch möglich, die Kamera 20 mit einem Teiler der Nadelfrequenz zu betreiben. Wenn beispielsweise bei der Bildung einer Maschenreihe nur jede zweite Nadel aufgenommen wird und die dazwischenliegenden Nadeln bei der Bildung der nächsten Nadelreihe aufgenommen werden, arbeitet die Kamera 20 mit der halben Nadelfrequenz (Teiler 2), und sie liefert nur 5000 Bilder pro Sekunde. In entsprechender Weise könnte man mit dem Teiler 3 arbeiten, indem bei der Bildung einer Maschenreihe nur jede dritte Nadel aufgenommen wird, usw. Je größer der Teiler ist, desto größer ist jedoch die Gefahr, daß beim plötzlichen Auftreten eines Grobfehlers mehrere fehlerhafte Maschenreihen gebildet werden, bevor der Fehler erkannt wird und die Maschine stillgesetzt werden kann.

Vorzugsweise ist die Optik 22 telezentrisch, also mit einem Strahlengang ausgebildet, bei dem die bestimmende Blende in einem der beiden Brennpunkte angeordnet ist. Bekanntlich besitzt eine telezentrische Optik die Eigenschaft, daß bei veränderter Entfernung des Objekts die Größe des Bildes konstant bleibt. Die Verwendung einer telezentrischen Optik ermöglicht es daher, bei variierendem Abstand zwischen Nadel und Optik einen gleichbleibenden Abbildungsmaßstab beizubehalten.

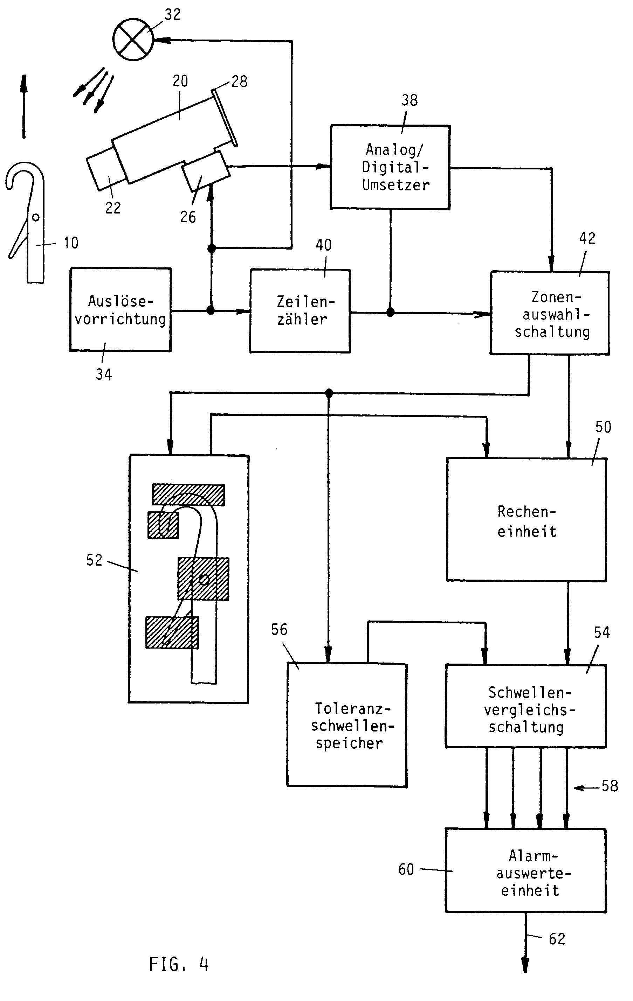

Fig. 4 zeigt das Blockschaltbild mit den Komponenten für die Echtzeit-Überwachung von Grobfehlern mittels des grobauflösenden Bildsensors 26. Die Nadel 10 bewegt sich vor der Optik 22 der Kamera 20 mit einer Geschwindigkeit in der Größenordnung von 1 m/s in der durch den Pfeil angegebenen Richtung. Damit trotz der großen Nadelgeschwindigkeit ein scharfes Bild der Nadel erhalten wird, erfolgt die Belichtung vorzugsweise durch eine stroposkopisch gepulste Lichtquelle 32. Vorzugsweise wird hierfür eine Halbleiterlichtquelle verwendet, die Licht im nahen Infrarotbereich erzeugt, um sowohl für den Menschen störende sichtbare Blitze zu vermeiden als auch Fremdlicht auszuschalten. Die Beleuchtung kann, wie in Fig. 4 dargestellt ist, im Auflicht erfolgen, oder auch im Durchlicht, indem die Lichtquelle auf der der Optik 22 entgegengesetzten Seite der Nadel 10 angeordnet wird. Das Bild der Nadel 10 muß stets bei exakt der gleichen Nadelposition aufgenommen werden. Zu diesem Zweck ist eine Auslösevorrichtung 34 vorgesehen, die synchron zur Nadelbewegung die stroboskopische Lichtquelle 32 und das Auslesen des Bildsensors 26 immer bei der gleichen Nadelposition auslöst.

In Fig. 1 ist durch den rechteckigen Rahmen 36 der Umriß des Bildbereichs angedeutet, der bei jeder Auslösung der stroboskopischen Lichtquelle 32 mittels der Optik 22 und des Bildsensors 26 erfaßt wird. Dieser Bildbereich enthält alle schraffierten Bereiche, die auf Grobfehler zu überwachen sind. Bei einer Nadelbewegungsfrequenz von typ. 10 kHz muß der Bildsensor 26 in der Lage sein, mindestens 10.000 Bilder pro Sekunde in elektrische Bildsignale umzusetzen. Bei Nadelkopfabmessungen im Millimeterbereich ist eine bildgebende Erfassung mit einer Querauflösung von etwa 12 bis 64 Bildpunkten erforderlich, damit Grobfehler mit ausreichender Sicherheit erkannt werden. Dies bedeutet, daß der in Fig. 1 durch den Rahmen 36 begrenzte Bildbereich in der Querrichtung in 12 bis 64 Bildpunkte zerlegt werden muß.

Um diese Bedingungen zu erfüllen, wird für den grobauflösenden Bildsensor 26 vorzugsweise einer der spaltenweise gleichzeitig auslesbaren Halbleiter-Matrix-Sensoren verwendet, wie sie für die OCR-Verfahren ("Optical Character Recognition") mit manuellen Lesepistolen entwickelt worden sind. Ein geeigneter Bildsensor dieser Art ist der Sensor RA3812P der Firma EG&G Reticon, der mit einer Anordnung aus 12 parallel auslesbaren Spalten von je 38 Bildpunkten arbeitet. Das Seitenverhältnis 12:38 entspricht in etwa dem durch den Rahmen 36 in Fig. 1 abgegrenzten Bildbereich. Dieser Bildbereich wird durch diesen Bildsensor in 38 horizontalen Zeilen von je 12 Bildpunkten abgetastet, wobei jeweils die zur gleichen Zeile gehörenden 12 Bildpunktsignale parallel ausgelesen werden. Ein anderer geeigneter Bildsensor aus der gleichen Baureihe der Firma EG&G Reticon ist der Sensor RA6464N mit einer Anordnung aus 64 parallel auslesbaren Spalten von je 64 Bildpunkten. Mit beiden Bildsensoren können durch gruppenweises Auslesen von Bildpunkten bis zu 24.500 Bilder pro Sekunde gewonnen werden.

An den Ausgang des Bildsensors 26 ist ein Analog/Digital-Umsetzer 38 angeschlossen, der die vom Bildsensor 26 gelieferten analogen Helligkeitssignale in einen Strom digitaler Bildpunktsignale umsetzt. Jedes digitale Bildpunktsignal stellt den digital codierten Helligkeitswert eines Bildpunktes des erfaßten Bildbereichs dar. Der Ausgang der Auslösevorrichtung 34 ist außer mit der stroboskopischen Lichtquelle 32 und dem Bildsensor 26 auch mit einem Zeilenzähler 40 verbunden, der durch das von der Auslösevorrichtung 34 gelieferte Auslösesignal gleichzeitig mit dem Start des Bildauslesens gestartet wird. Die Ausgangssignale des Zeilenzählers 40 werden einerseits dem Analog/Digital-Umsetzer 38 und andererseits einer Zonenauswahlschaltung 42 zugeführt, die auch die vom Analog/Digital-Umsetzer 38 gelieferten digitalen Bildpunktsignale empfängt.

Die Zonenauswahlschaltung 42 enthält einen vom Benutzer programmierbaren Speicher, in welchem diejenigen Bildzonen festgelegt sind, welche als Prüfzonen überwacht werden sollen. In Fig. 1 sind als Beispiel vier rechteckige Prüfzonen 44, 45, 46, 47 markiert, welche die schraffierten Grobfehlerzonen enthalten und in der Zonenauswahlschaltung 42 gespeichert sein können. Unter Steuerung durch die Ausgangssignale des Zeilenzählers 40 sperrt die Zonenauswahlschaltung 42 alle digitalen Bildpunktsignale, die nicht zu einer der zu überwachenden Prüfzonen 44, 45, 46, 47 gehören. Die nicht gesperrten digitalen Bildpunktsignale werden zu einer Recheneinheit 50 übertragen.

Ein Referenzspeicher 52 enthält für jede zu überwachende Prüfzone einen Speicherbereich, in dem die digitalen Helligkeitswerte einer guten Nadelzone bildpunktweise als Referenzbild gespeichert sind, wie in Fig. 4 symbolisch angedeutet ist. Diese Speicherbereiche werden unter Steuerung durch die Zonenauswahlschaltung 42 synchron zu den übertragenen digitalen Bildpunktsignalen des momentan aufgenommenen Prüfbildes ausgelesen, und die dadurch am Ausgang des Referenzspeichers 52 abgegebenen digitalen Bildpunktsignale werden gleichfalls zu der Recheneinheit 50 übertragen. Die Bildpunktsignale aller Bildpunktpaare, die zu der gleichen Prüfzone einerseits in dem von der Kamera 20 aufgenommenen Prüfbild und andererseits in dem im Referenzspeicher 52 gespeicherten Referenzbild gehören, werden in der Recheneinheit 50 verglichen, die aufgrund des Vergleichs ein Ähnlichkeitsmaß berechnet. Bekannte Ähnlichkeitsmaße sind der Korrelationskoeffizient und der Betrag der summierten Differenzen; die Erzeugung und Berechnung dieser Ähnlichkeitsmaße ist dem Fachmann der Bildverarbeitung bekannt. Die Recheneinheit 50 liefert am Ausgang Ähnlichkeitssignale, die die für die verschiedenen Prüfzonen nacheinander berechneten Ähnlichkeitsmaße darstellen. Jedes Ähnlichkeitssignal zeigt den Grad der Ähnlichkeit zwischen einer Prüfzone des gerade aufgenommenen Prüfbildes und der entsprechenden Prüfzone des im Referenzspeicher 52 gespeicherten Referenzbildes an. An den Ausgang der Recheneinheit 50 ist eine Schwellenvergleichsschaltung 54 angeschlossen, die die Ähnlichkeitssignale empfängt.

In einem Toleranzschwellenspeicher 56 ist für jede Prüfzone eine zugeordnete Toleranzschwelle gespeichert, die vom Benutzer eingegeben werden kann. Der Benutzer kann somit für die verschiedenen Prüfzonen individuelle Toleranzschwellen vorgeben. Die gespeicherten Toleranzschwellen werden unter Steuerung durch die Zonenauswahlschaltung 42 nacheinander so ausgelesen und der Schwellenvergleichsschaltung 54 zugeführt, daß in der Schwellenvergleichsschaltung 54 bei jedem Eintreffen eines einer Prüfzone zugeordneten Ähnlichkeitssignals auch die der gleichen Prüfzone zugeordnete Toleranzschwelle zur Verfügung steht. Die Schwellenvergleichsschaltung 54 hat mehrere Ausgänge 58, die den verschiedenen Prüfzonen zugeordnet sind. Sie vergleicht jedes von der Recheneinheit 50 gelieferte Ähnlichkeitssignal mit der der gleichen Prüfzone zugeordneten Toleranzschwelle und gibt an dem der Prüfzone zugeordneten Ausgang 58 ein Voralarmsignal ab, wenn durch den Vergleich festgestellt wird, daß der Ähnlichkeitsgrad zwischen dem Prüfbild und dem Referenzbild der betreffenden Prüfzone die Toleranzschwelle nicht erreicht. Die Ausgänge 58 der Schwellenvergleichsschaltung 54 sind mit einer Alarmauswerteeinheit 60 verbunden, die alle für eine Bildabtastung erhaltenen Voralarmsignale auswertet und nach einer vom Benutzer vorgebbaren Gewichtung der einzelnen Voralarmsignale entscheidet, ob an einem Ausgang 62 ein Hauptalarmsignal auszugeben ist.

Da jeder Ausgang 58 der Schwellenvergleichsschaltung 54 einer bestimmten Prüfzone zugeordnet ist, läßt der Ausgang, an dem ein Voralarmsignal erscheint, auch erkennen, in welcher Prüfzone ein Grobfehler festgestellt worden ist. Dadurch kann die Art des Grobfehlers klassifiziert werden.

Die in Fig. 4 gezeigten Einheiten arbeiten mit dem laufend vom Bildsensor 26 über den Analog/Digital-Umsetzer gelieferten Strom von Bildpunktsignalen; eine Speicherung erfolgt lediglich im Bildsensor 26, wo das durch die stroboskopische Beleuchtung erhaltene analoge optische Bild der Nadel in Form von Ladungen in der Halbleitermatrix gespeichert wird. Somit erübrigt sich ein digitaler Bildspeicher, und es entfallen die damit verbundene Rechenzeit und der zusätzliche Kostenaufwand. Am Ende eines Bildauslesezyklus liegt die Entscheidung darüber vor, ob ein Hauptalarm gegeben werden muß oder nicht; das beschriebene System arbeitet also in Echtzeit bei voller Maschinengeschwindigkeit. Es ist wegen der angewendeten digitalen Technik störsicher und flexibel und läßt sich kostengünstig realisieren. Die Lage, Größe und Anzahl von Prüfzonen und die für jede Zone individuellen Toleranzschwellen können vom Benutzer frei festgelegt werden; dies erlaubt eine flexible Anpassung des Systems an viele unterschiedlich geformte und an unterschiedlichen Stellen zu prüfende Nadeltypen.

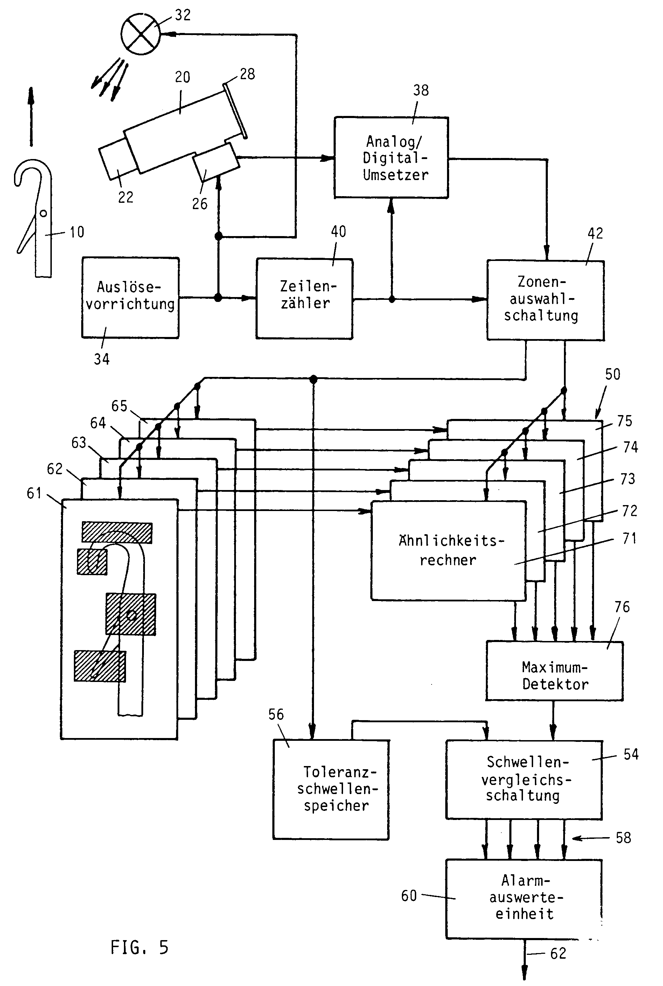

Wegen der telezentrischen Abbildung bewirken Nadelschwingungen in Richtung der optischen Achse der Bildsensor-Kamera 20 keine Maßstabsänderung und daher auch keine Falschalarme. Dagegen können seitliche Nadelschwingungen quer zur optischen Achse trotz guter Prüfnadel zu unzulässigen Abweichungen zwischen den Prüfzonen des aufgenommenen Prüfbildes und den im Referenzspeicher 52 abgespeicherten Referenzbildern dieser Prüfzonen führen und dadurch Falschalarme auslösen. Fig. 5 zeigt eine abgeänderte Ausführungsform der Anordnung von Fig. 4, mit der die Auslösung von Falschalarmen durch seitliche Nadelschwingungen vermieden wird.

Die Anordnung von Fig. 5 unterscheidet sich von derjenigen von Fig. 4 dadurch, daß anstelle des einzigen Referenzspeichers 52 von Fig. 4 mehrere Referenzspeicher vorgesehen sind; als Beispiel sind fünf Referenzspeicher 61, 62, 63, 64, 65 dargestellt. In diesen Referenzspeichern werden für die einzelnen Schwingungszustände unterschiedliche Referenzbilder abgespeichert. Dies kann z.B. automatisch in einer Trainingsphase geschehen, in welcher zunächst das ideale Referenzbild einer schwingungsfreien Nadel dadurch erhalten wird, daß in einem ersten Zyklus nacheinander die Bilder aller Nadeln des Nadelbetts aufgenommen und die erhaltenen Zonenbilder zur Mittelung aufaddiert werden. Dieses ideale Referenzbild wird im Referenzspeicher 61 abgespeichert. In weiteren Zyklen werden dann die Zonenbilder einzelner Nadeln, die unterschiedliche Abweichungen von dem idealen Referenzbild haben, in den weiteren Referenzspeichern 62 bis 65 abgespeichert. Bei dem Ausführungsbeispiel von Fig. 5 können somit fünf unterschiedliche Referenzbilder jeder Zone abgespeichert werden, die als repräsentative Referenzbilder von fünf Schwingungszuständen gelten.

Die Referenzspeicher 61 bis 65 werden unter Steuerung durch die Zonenauswahlschaltung 42 parallel ausgelesen, und die dadurch erhaltenen digitalen Bildpunktsignale der verschiedenen Referenzbilder jeder Zone werden parallel zu der Recheneinheit 50 übertragen und in dieser gleichzeitig mit den von der Zonenauswahlschaltung 42 kommenden digitalen Bildpunktsignalen des Prüfbildes der betreffenden Zone verglichen, wobei für jeden Vergleich ein eigenes Ähnlichkeitsmaß gebildet wird. Dies ist in Fig. 5 dadurch angedeutet, daß die Recheneinheit 50 fünf Ähnlichkeitsrechner 71, 72, 73, 74, 75 enthält. Die von den fünf Ähnlichkeitsrechnern 71 bis 75 gelieferten Ähnlichkeitsmaße werden einem Maximum-Detektor 76 zugeführt, welcher das Ähnlichkeitsmaß, das die beste Ähnlichkeit zwischen dem Prüfbild und dem Referenzbild anzeigt, auswählt und zu der Schwellenvergleichsschaltung 54 überträgt, die somit nur dieses Ähnlichkeitsmaß mit der im Toleranzschwellenspeicher 56 gespeicherten Toleranzschwelle vergleicht. Durch dieses Verfahren wird erreicht, daß unähnliche Bilder, die infolge von momentanen Schwingungen der Nadel auftreten, von der Bewertung der Ähnlichkeit ausgeschlossen werden und daher nicht zu Falschalarmen führen. Wegen der sehr großen Anzahl der pro Schicht inspizierten Nadeln muß die Falschalarmwahrscheinlichkeit extrem niedrig sein. Wenn beispielsweise höchstens ein Falschalarm pro 8 Stunden-Schicht an einer Maschine mit einer Nadelfrequenz von 10.000 Nadeln/s zulässig ist, darf die Falschalarmwahrscheinlichkeit nicht größer als etwa 1:300.000.000 sein. Durch Erhöhen der Anzahl der Referenzspeicher über die in Fig. 5 als Beispiel angegebene Zahl 5 hinaus, kann die Auswirkung zufälliger Nicht-Übereinstimmungen von Prüfbild und Referenzbild wirksam verringert werden.

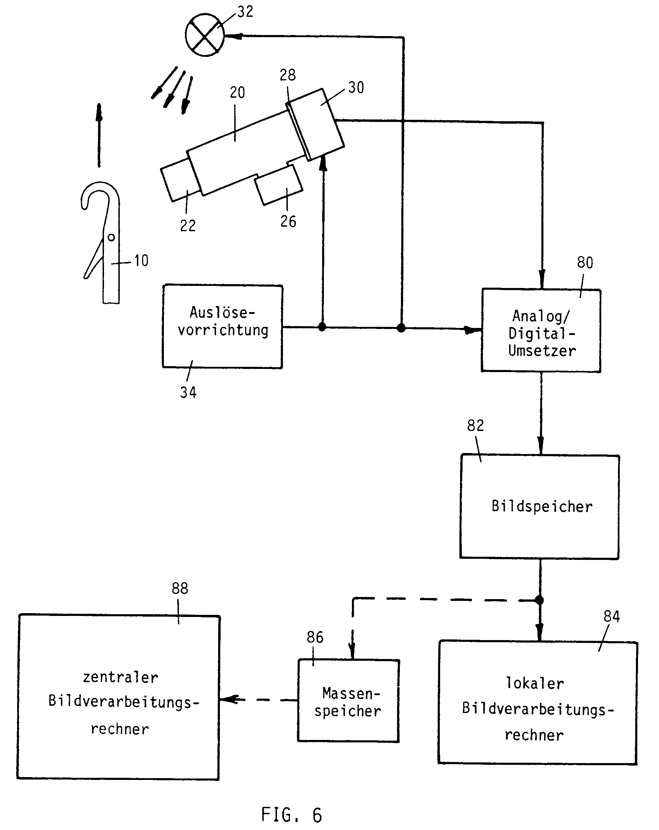

Fig. 6 zeigt das Blockschaltbild mit den Komponenten für die Erkennung von Verschleißfehlern und Feinrissen mit Hilfe des hochauflösenden Bildsensors 30, der zu diesem Zweck am Flansch 28 der Kamera 20 befestigt ist. Die Verwendung des hochauflösenden Bildsensors 30 ist erforderlich, weil bei der geringen Größe der Nadelköpfe, die im Millimeterbereich liegt, für eine wirksame Erkennung des Verschleißes das Bild der Nadel mit mindestens 500 Bildpunkten über die ganze Nadelbreite erfaßt werden muß. Die Verwendung von vertikal angeordneten Zeilensensoren ist problematisch, weil die zweidimensionale Genauigkeit eines aus einzelnen Bildzeilen zusammengesetzten Zeilenbildes davon abhängt, daß die Geschwindigkeit der Strickmaschine, also die Drehgeschwindigkeit einer Rundstrickmaschine oder die Lineargeschwindigkeit einer Flachstrickmaschine, konstant und genau bekannt ist. In Wirklichkeit sind diese Geschwindigkeiten jedoch weder konstant noch genau bekannt. Aus diesen Gründen wird für die hochauflösende Erfassung der Verschleißdaten ein Matrix-Bildsensor mit einer Auflösung von beispielsweise 512 x 512 bis 1300 x 1100 Bildpunkten verwendet. Solche Bildsensoren können nur mit etwa 25 bis 100 Bildern pro Sekunde ausgelesen werden. Da Verschleißmessungen präventive Wartungsmaßnahmen darstellen, ist es zulässig, diese in größeren Zeitabständen und bei langsam laufender Maschine durchzuführen.

Daher ist die Verschleißprüfung nicht in das Echtzeitsystem von Fig. 4 oder 5 mit eingebunden, sondern als offline-Wartungssystem konzipiert. Wenn eine Verschleißprüfung durchgeführt werden soll, wird der hochauflösende Bildsensor 30 am Flansch 28 der Kamera 20 befestigt, und bei langsam laufender Maschine wird von jeder Nadel 10 ein Bild der sichtbaren Nadeloberfläche bei einer durch die Auslösevorrichtung 34 bestimmten vorgegebenen Stellung der Nadel aufgenommen. Die vom Bildsensor 30 abgegebenen analogen Bildsignale werden in einem Analog/Digital-Umsetzer 80 digitalisiert, wobei jedes analoge Bildpunktsignal in eine mehrstellige digitale Codegruppe umgesetzt wird, die den Grauwert des Bildpunktes angibt. Die vom Analog/Digital-Umsetzer 80 gelieferten digitalen Bildpunktsignale werden in einem Bildspeicher 82 abgespeichert. Das auf diese Weise im Bildspeicher 82 gespeicherte Grauwertbild wird dann nach bekannten Verfahren der Bildverarbeitung, wie geometrische Vermessung an interpolierten Konturen, automatische Beurteilung der Oberfläche durch Texturanalyse usw., zur Erkennung des Verschleißes oder von Feinrissen ausgewertet. Diese Analyse kann an Ort und Stelle im Rhythmus der Bilderfassung mit Hilfe eines lokalen Bildverarbeitungsrechners 84 erfolgen. Wahlweise kann auch vom Wartungsingenieur eine Sammlung von Grauwertbildern digital auf einem Massenspeicher 86, wie einer Magnetplatte, einer optischen Platte oder dergleichen, abgespeichert und später in einem zentralen Bildverarbeitungsrechner 88 ausgewertet werden, oder es können die analogen Ausgangssignale der Bildsensor-Kamera 20 oder die vom Analog/Digital-Umsetzer 80 gelieferten digitalen Bildpunktsignale direkt zu dem zentralen Bildverarbeitungsrechner 88 übertragen werden. Durch diese Zusammenfassung der an zahlreichen Strickmaschinen erforderlichen aufwendigen hochauflösenden Bildverarbeitung in einem einzigen zentralen Bildverarbeitungsrechner lassen sich fortgeschrittene Verfahren der Bildverarbeitung und künstlichen Intelligenz wirtschaftlich optimal anwenden.

Wie bei dem anhand von Fig. 4 und 5 erläuterten Echtzeitverfahren zur Erkennung von Grobfehlern kann auch die hochauflösende Verschleißprüfung auf die besonders verschleißanfälligen Nadelzonen beschränkt werden, beispielsweise auf die in Fig. 2 markierten Prüfzonen 91, 92, 93, 94 und 95. Dadurch läßt sich der Speicherbedarf im Bildspeicher 82 und gegebenenfalls auf dem Massenspeicher 86 reduzieren und die Verarbeitungszeit verkürzen.

Anstatt den hochauflösenden Bildsensor 30 am zweiten Strahlenteilerausgang der auch für die Grobprüfung verwendeten Kamera anzuflanschen, ist es selbstverständlich auch möglich, den hochauflösenden Bildsensor mit einer eigenen Optik zu versehen und an einer hierfür vorgesehenen Halterung für die Dauer der Verschleißprüfung anzubringen.

## Patentansprüche

1. Verfahren zur optischen Qualitätskontrolle der zur Bildung von Maschen aus einer Ruhestellung in eine Maschenbildungsstellung und wieder zurück bewegten Nadeln von Strickmaschinen, bei dem
mit Hilfe wenigstens einer Bildsensor-Kamera ein Prüfbild des zu überwachenden Nadelteils der jeweils aus ihrer Ruhestellung herausbewegten Nadel in der Weise aufgenommen wird, daß die Aufnahme des Prüfbildes und das Auslesen des Bildsensors ausgelöst werden, wenn die jeweilige Nadel eine vorbestimmte, für alle Nadeln gleiche Stellung erreicht hat,
die beim Auslesen des Bildsensors enthaltenen analogen Bildsignale in digitale Bildpunktsignale umgesetzt werden,
die digitalen Bildpunktsignale des Prüfbildes oder einzelner Prüfzonen des Prüfbildes zur Gewinnung von Informationen über den Zustand der jeweils aufgenommenen Nadel verarbeitet werden, wobei
zur kontinuierlichen Erkennung von Grobfehlern, wie Brüchen, Grobrissen und Verbiegungen der Nadeln, die Prüfbilder während des Betriebes der Strickmaschine mit grober Bildauflösung mit der Nadelfrequenz oder einem Teiler der Nadelfrequenz aufgenommen werden und ein Alarmsignal erzeugt wird, wenn die Verarbeitung der digitalen Bildpunktsignale das Vorliegen eines Grobfehlers ergibt und
zur gelegentlichen Bestimmung der Verschleißdaten und von sich allmählich entwickelnden Feinfehlern, wie Feinrissen, die Prüfbilder mit hoher Bildauflösung aufgenommen werden,
die digitalen Bildpunktsignale dieser Prüfbilder bzw. der Prüfzonen gespeichert werden und
die gespeicherten Bildpunktsignale zur Bestimmung geometrischer Abmessungen der Nadeln und/oder zur Bestimmung von Oberflächenmerkmalen der sichtbaren Nadeloberfläche ausgewertet werden.

2. Verfahren nach Anspruch 1, dadurch gekennzeichnet, daß bei der kontuierlichen Erkennung von Grobfehlern die digitalen Bildpunktsignale des Prüfbildes bzw. der Prüfzonen des Prüfbildes im Rhythmus der Bildpunktfrequenz mit den Bildpunktsignalen wenigstens eines gespeicherten Referenzbildes verglichen werden, daß aufgrund jedes Vergleiches ein quantitatives Ähnlichkeitsmaß gebildet wird und daß das Alarmsignal erzeugt wird, wenn das Ähnlichkeitsmaß eine vorgegebene Toleranzschwelle nicht erreicht.

3. Verfahren nach Anspruch 2, dadurch gekennzeichnet, daß die digitalen Bildpunktsignale des Prüfbildes bzw. der Prüfzonen gleichzeitig mit den Bildpunktsignalen mehrerer gespeicherter Referenzbilder verglichen werden, die unterschiedlichen Schwingungs- und/oder Auslenkungszuständen der Nadel entsprechen, und daß nur das die größte Ähnlichkeit anzeigende Ähnlichkeitsmaß dem Vergleich mit der vorgegebenen Toleranzschwelle unterworfen wird.

4. Verfahren nach Anspruch 2 oder 3, dadurch gekennzeichnet, daß zur automatischen Erstellung eines der nicht schwingenden oder ausgelenkten Nadel entsprechenden Referenzbildes in einer Trainingsphase während eines oder mehrerer Durchläufe Prüfbilder aller Nadeln aufgenommen und die digitalen Bildpunktsignale der einander entsprechenden Bildpunkte zur Mittelwertbildung addiert werden und daß die gemittelten Bildpunktsignale als Grund-Referenzbild abgespeichert werden.

5. Verfahren nach Anspruch 4, dadurch gekennzeichnet, daß die digitalen Bildpunktsignale der Prüfbilder einzelner Nadeln, die Abweichungen von dem Grund-Referenzbild aufweisen, als weitere Referenzbilder abgespeichert werden.

6. Verfahren nach einem der vorhergehenden Ansprüche, dadurch gekennzeichnet, daß die Aufnahme der Prüfbilder mit grober Bildauflösung während des Betriebs der Strickmaschine mit der vollen Arbeitsgeschwindigkeit erfolgt.

7. Verfahren nach einem der vorhergehenden Ansprüche, dadurch gekennzeichnet, daß die Aufnahme der Prüfbilder mit hoher Auflösung bei reduzierter Arbeitsgeschwindigkeit der Strickmaschine erfolgt.

8. Anordnung zur optischen Qualitätskontrolle der zur Bildung von Maschen aus einer Ruhestellung in eine Maschenbildungsstellung und zurück bewegten Nadeln von Strickmaschinen, mit
wenigstens einer Bildsensor-Kamera mit einer Optik und wenigstens einem Bildsensor, die so an der Strickmaschine angeordnet ist, daß die Optik den zu überwachenden Teil der jeweils aus ihrer Ruhestellung herausbewegten Nadel auf den bzw. jeden Bildsensor abbildet,
eine Auslösevorrichtung, die die Aufnahme eines Prüfbildes des zu überwachenden Nadelteils und das Auslesen des Bildsensors auslöst, wenn die Nadel eine vorbestimmte, für alle Nadeln gleiche Stellung erreicht,
einem an den Ausgang des bzw. jeden Bildsensors angeschlossenen Analog/Digital-Umsetzer zur Umsetzung der vom Bildsensor gelieferten analogen Bildsignale in digitale Bildpunktsignale,
einer an den Ausgang des Analog/Digitalumsetzers angeschlossenen Signalverarbeitungsschaltung, welche die digitalen Bildpunktsignale zur Gewinnung von Informationen über den Zustand der jeweils aufgenommenen Nadel verarbeitet, wobei
zur kontinuierlichen Erkennung von Grobfehlern, wie Brüchen, Rissen und Verbiegungen der Nadeln, die Bildsensor-Kamera einem grobauflösenden Bildsensor mit hoher Bildauslesefrequenz enthält und
zur gelegentlichen Bestimmung der Verschleißdaten und von sich allmählich entwickelnden Feinfehlern, wie Feinrissen, die Bildsensor-Kamera einen hochauflösenden Bildsensor enthält und mit
einer Alarmauswerteeinheit, die in Abhängigkeit von von der Signalverarbeitungsschaltung bei der Erkennung von Grobfehlern empfangenen Alarmsignalen über das Aussenden eines Hauptalarmsignales entscheidet und
wobei die Signalverarbeitungsschaltung einen Bildspeicher enthält, in welchem die vom hochauflösenden Bildsensor stammenden digitalen Bildpunktsignale gespeichert werden und ein Bildrechner vorgesehen ist, der die gespeicherten Bildpunktsignale zur Bestimmung geometrischer Abmessungen der Nadeln und/oder von Oberflächenmerkmalen der sichtbaren Nadeloberfläche verarbeitet.

9. Anordnung nach Anspruch 8, gekennzeichnet durch eine stroboskopische Lichtquelle, die von der Auslöseeinrichtung synchron mit der Bildsensor-Kamera ausgelöst wird und so angeordnet ist, daß sie die von der Bildsensor-Kamera aufzunehmende Nadel beleuchtet.

10. Anordnung nach Anspruch 8 oder 9, dadurch gekennzeichnet, daß die Bildsensor-Kamera einen im Strahlengang der Optik angeordneten Strahlenteiler enthält, der das von der Optik erfaßte Bild des zu überwachenden Nadelteils einerseits zu der kontinuierlichen Erkennung von Grogfehlern, wie Brüchen, Rissen und Verbiegungen der Nadeln auf dem grobauflösenden Bildsensor mit hoher Bildauslösefrequenz abbildet und andererseits zu einem Ausgang richtet, an dem der hoch auflösende Bildsensor zur gelegentlichen Bestimmung der Verschleißdaten und von sich allmählich entwickelnden Feinfehlern, wie Feinrissen, angebracht werden kann.

11. Anordnung nach Anspruch 8, dadurch gekennzeichnet, daß die Signalverarbeitungsschaltung wenigstens einen Referenzspeicher enthält, in welchem ein Referenzbild des zu überwachenden Nadelteils oder Referenzbilder einzelner Prüfzonen des zu überwachenden Nadelteils gespeichert sind sowie eine Recheneinheit, welche die vom grobauflösenden Bildsensor stammenden digitalen Bildpunktsignale des Prüfbildes sowie die synchron damit aus dem Referenzspeicher ausgelesenen digitalen Bildpunktsignale des Referenzbildes bzw. der entsprechenden Referenzbilder empfängt und durch Vergleich der digitalen Bildpunktsignale ein Ähnlichkeitsmaß für das Prüfbild bzw. für jede Prüfzone berechnet und daß der Recheneinheit eine Schwellenvergleichsschaltung nachgeschaltet ist, welche die Ähnlichkeit mit vorgegebenen Toleranzschwellen vergleicht und für jedes Ähnlichkeitsmaß, das die zugeordnete Toleranzschwelle nicht erreicht, ein Alarmsignal liefert.

12. Anordnung nach Anspruch 11, gekennzeichnet durch einen Toleranzschwellenspeicher in welchem die den verschiedenen Prüfzonen zugeordneten individuellen Toleranzschwellen gespeichert sind.

13. Anordnung nach Anspruch 11 oder 12, dadurch gekennzeichnet, daß die Alarmauswerteeinheit alle von der Schwellenvergleichsschaltung gelieferten Alarmsignale empfängt und nach einer vorgegebenen Gewichtung der Alarmsignale über das Aussenden des Hauptalarmsignales entscheidet.

14. Anordnung nach einem der Ansprüche 8 bis 13, dadurch gekennzeichnet, daß die Signalverarbeitungsschaltung mehrere Referenzspeicher enthält, in denen Referenzbilder des zu überwachenden Nadelteils bzw. Referenzbilder der Prüfzonen für unterschiedliche Schwingungszustände oder Auslenkungen der Nadel gespeichert sind, daß alle Referenzspeicher synchron mit den vom Analog/Digital-Umsetzer gelieferten digitalen Bildpunktsignalen gleichzeitig ausgelesen werden, daß die Recheneinheit die von den Referenzspeichern gelieferten digitalen Bildpunktsignale parallel mit den vom Analog/Digital-Umsetzer gelieferten digitalen Bildpunktsignalen vergleicht und aufgrund jedes Vergleiches ein Ähnlichkeitsmaß berechnet, und daß der Recheneinheit ein Maximum-Detektor nachgeschaltet ist, der von den gleichzeitig berechneten Ähnlichkeitsmaßen nur das die größte Ähnlichkeit anzeigende Ähnlichkeitsmaß zur Schwellenvergleichsschaltung überträgt.

15. Anordnung nach einem der Ansprüche 11 bis 14, dadurch gekennzeichnet, daß zwischen dem Analog/Digital-Umsetzer und die Recheneinheit eine Zonenauswahlschaltung eingefügt ist, welche nur die zu vorbestimmten Prüfzonen des Prüfbildes gehörenden digitalen Bildpunktsignale zur Recheneinheit überträgt.

16. Anordnung nach Anspruch 15, dadurch gekennzeichnet, daß die Zonenauswahlschaltung das Auslesen des bzw. jedes Referenzspeichers synchron mit den übertragenen Bildpunktsignalen auslöst.

## Claims

1. Method for optical quality control of knitting machine needles, which are moved from a resting position to a stitch forming position and back again for the formation of stitches, wherein
a test image of the portion to be monitored of the respective needle moved out of its resting position is acquired by means of at least one image sensor camera in such a way that acquisition of the test image and readout of the image sensor are triggered when the respective needle has reached a predetermined position which is the same for all the needles;
the analog image signals furnished on readout of the image sensor are converted into digital pixel signals;
the digital pixel signals of the test image or of individual test zones of the test image are processed for obtaining information on the state of quality of the respective recorded needle, in which case
for continuous detection of major faults such as breakages, coarse cracks and bends of the needles, the test images are acquired during operation of the knitting machine with a coarse image resolution at the needle frequency or a divisor of the needle frequency, and an alarm signal is generated when processing of the digital pixel signals results in the presence of a major fault, and
for occasional determination of wear data and gradually developing minor faults such as fine cracks, the test images are acquired with high image resolution,
the digital pixel signals of these test images or test zones are stored and
the stored pixel signals are evaluated for determination of geometric dimensions of the needles and/or for determination of surface characteristics of the visible needle surface.

2. Method according to claim 1, characterised in that for continuous detection of major faults, the digital pixel signals of the test image or test zones of the test image are compared to the pixel signals of at least one stored reference image at the rhythm of the pixel frequency; that on the basis of this comparison, a quantitative similarity degree is formed; and that the alarm signal is generated when the similarity degree does not reach a predetermined tolerance threshold.

3. Method according to Claim 2, characterised in that the digital pixel signals of the test image or test zones are compared simultaneously to the pixel signals of several stored reference images which correspond to different oscillation and/or deflection states of the needles; and that only the similarity degree indicating the greatest similarity is subjected to comparison with the predetermined tolerance threshold.

4. Method according to Claim 2 or 3, characterised in that for automatic generation of a reference image corresponding to the non-oscillating or non-deflected needle in a training phase, test images of all the needles are acquired during one or several runs and the digital pixel signals of corresponding pixels are summed to form an average value; and that the averaged values of the pixel signals are stored as the basic reference image.

5. Method according to Claim 4, characterised in that the digital pixel signals of the test images of individual needles exhibiting deviations from the basic reference image are stored as further reference images.

6. Method according to one of the preceding claims, characterised in that the acquisition of test images with coarse resolution is carried out during operation of the knitting machine at full working speed.

7. Method according to one of the preceding claims, characterised in that the acquisition of test images with high resolution is carried out at reduced working speed of the knitting machine.

8. Arrangement for optical quality control of knitting machine needles, which are moved from a resting position to a stitch forming position and back again for the formation of stitches, having
at least one image sensor camera with an optical system and at least one image sensor, which is arranged on the knitting machine in such a manner that the optical system images the portion to be monitored of the respective needles moved out of their resting position onto the or onto each image sensor;
a trigger device which triggers the acquisition of a test image of the needle portion to be monitored and the readout of the image sensor when the needle reaches a predetermined position which is the same of all the needles;
an analog to digital converter connected to the output of the or of each image sensor for converting the analog image signals delivered by the image sensor to digital pixel signals;
a signal processing circuit connected to the output of the analog to digital converter to process the digital pixel signals to obtain information on the state of quality of the respective recorded needle, in which case
for the continuous detection of major faults such as breakages, cracks and bends of the needles, the image sensor camera includes a coarse resolving image sensor with a high image readout frequency and
for occasional determination of wear data and gradually developing minor faults such as fine cracks, the image sensor camera includes a highly resolving image sensor; and having
an alarm evaluating unit which decides on the emission of a main alarm signal in dependence on alarm signals received by the signal processing circuit during the detection of major faults, and
wherein the signal processing circuit includes an image memory in which the digital pixel signals originating from the highly resolving image sensor are stored, and an image computer is provided which processes the stored pixel signals for the determination of geometric dimensions of the needles and/or of surface characteristics of the visible needle surfaces.

9. Arrangement according to Claim. 8, characterised by a stroboscopic light source which is triggered by the trigger device synchronously with the image sensor camera and is arranged so that it illuminates the needles to be recorded by the image sensor camera.

10. Arrangement according to Claim 8 or 9, characterised in that the image sensor camera includes a beam divider, which is arranged in the beam path of the optical system and which for continuous detection of major faults such as breakages, cracks and bends of the needles on the one hand images the image of the needle portion to be monitored acquired by the optical system on the coarsely resolving image sensor with high image readout frequency, and on the other hand directs said image to an exit at which the highly resolving image sensor can be disposed for occasional determination of the wear data and gradually developing minor faults such as fine cracks.

11. Arrangement according to Claim 8, characterised in that the signal processing circuit includes at least one reference memory in which a reference image of the needle portion to be monitored or reference images of individual test zones of the needle portion to be monitored are stored, and a processing unit which receives the digital pixel signals of the test image originating from the coarse resolving image sensor as well as the digital pixel signals of the reference images read synchronously therewith from the reference memory or the corresponding reference images, and by comparison of the digital pixel signals calculates a similarity degree for the test image or for each test zone; and that the processing unit has a threshold comparison circuit connected downline of it which compares the similarity with predetermined tolerance thresholds, and furnishes an alarm signal for each similarity degree which does not reach the associated tolerance threshold.

12. Arrangement according to Claim 11, characterised by a tolerance threshold memory in which the individual threshold tolerances allocated to the various test zones are stored.

13. Arrangement according to Claim 11 or 12, characterised in that the alarm evaluating unit receives all the alarm signals furnished by the threshold comparison circuit and in accordance with a predetermined weighting of the alarm signals decides on the emission of a main alarm signal.

14. Arrangement according to one of Claims 8 to 13, characterised in that the signal processing circuit includes several reference memories, in which reference images of the needle portion to be monitored or reference images of the test zones for different oscillation states or deflections of the needle are stored; that all the reference memories are read out simultaneously synchronously with the digital pixel signals furnished by the analog to digital converter; that the processing unit compares the digital pixel signals furnished by the reference memories in parallel with the digital pixel signals furnished by the analog to digital converter, and on the basis of each comparison computes a similarity degree; and that the processing unit has a maximum detector connected downline of it which of the simultaneously computed similarity degrees, transfers to the threshold comparison circuit only the similarity degree indicating the greatest similarity.

15. Arrangement according to one of Claims 11 to 14, characterised in that between the analog to digital converter and the processing unit, a zone selecting circuit is inserted which transfers only the digital pixel signals belonging to predetermined test zones of the test image to the processing unit.

16. Arrangement according to Claim 15, characterised in that the zone selecting circuit triggers readout of the or of each reference memory synchronously with the transferred pixel signals.

## Revendications

1. Procédé de contrôle optique de la qualité des aiguilles de métiers à tricoter, aiguilles qui, en vue de la formation de mailles, sont déplacées d'une position de repos à une position de formation de mailles et inversement, procédé suivant lequel
une image de contrôle de la partie à surveiller de chaque aiguille déplacée hors de sa position de repos est enregistrée, à l'aide d'au moins une caméra à capteur d'image, de telle manière que l'enregistrement de l'image de contrôle et la lecture du capteur d'image soient déclenchés lorsque l'aiguille a atteint une position prédéterminée qui est la même pour toutes les aiguilles,
les signaux d'image analogiques obtenus lors de la lecture du capteur d'image sont transformés en signaux de points d'image numériques,
les signaux de points d'image numériques de l'image de contrôle ou de différentes zones de contrôle de l'image de contrôle sont traités en vue de l'obtention d'informations sur l'état de l'aiguille respective,
pour la reconnaissance en continu de gros défauts tels que ruptures, grosses fissures et déformations des aiguilles, les images de contrôle sont enregistrées, pendant le fonctionnement du métier à tricoter, avec une résolution d'image grossière à la fréquence des aiguilles ou un diviseur de la fréquence des aiguilles et un signal d'alarme est produit lorsque le traitement des signaux de points d'image numériques indique la présence d'un gros défaut, et
pour la détermination occasionnelle de données d'usure et de défauts fins se développant progressivement, tels que fines fissures, les images de contrôle sont enregistrées avec une résolution d'image élevée,
les signaux de points d'image numériques de ces images de contrôle ou des zones de contrôle sont mémorisés, et
les signaux de points d'image mémorisés sont exploités en vue de la détermination de dimensions géométriques des aiguilles et/ou en vue de la détermination de caractéristiques de la surface visible des aiguilles.

2. Procédé suivant la revendication 1, **caractérisé** par le fait que lors de la détection continue de gros défauts, les signaux de points d'image numériques de l'image de contrôle ou des zones de contrôle de l'image de contrôle sont comparés, au rythme de la fréquence des points d'image, avec les signaux de points d'image d'au moins une image de référence mémorisée, qu'une mesure de ressemblance quantitative est formée sur la base de chaque comparaison et que le signal d'alarme est produit lorsque la mesure de ressemblance n'atteint pas un seuil de tolérance prédéterminé.

3. Procédé suivant la revendication 2, **caractérisé** par le fait que les signaux de points d'image numériques de l'image de contrôle ou des zones de contrôle sont simultanément comparés avec les signaux de points d'image de plusieurs images de référence mémorisées, qui correspondent à des états de vibration et/ou de déviation différentes des aiguilles, et que seule la mesure de ressemblance indiquant la plus grande ressemblance est soumise à la comparaison avec le seuil de tolérance prédéterminé.

4. Procédé suivant la revendication 2 ou 3, **caractérisé** par le fait qu'en vue de la production automatique d'une image de référence correspondant à l'aiguille non vibrante ou déviée, des images de contrôle de toutes les aiguilles sont, dans une phase d'entraînement, enregistrées pendant un ou plusieurs passages et les signaux de points d'image numériques des points d'image correspondant les uns aux autres sont additionnés en vue de la mise en moyenne, et que les signaux de points d'image mis en moyenne sont mémorisés en tant qu'image de référence de base.

5. Procédé suivant la revendication 4, **caractérisé** par le fait que les signaux de points d'image numériques des images de contrôle d'aiguilles individuelles, qui présentent des écarts par rapport à l'image de référence de base, sont mémorisés en tant qu'images de référence supplémentaires.

6. Procédé suivant l'une des revendications précédentes, **caractérisé** par le fait que l'enregistrement des images de contrôle avec résolution d'image grossière s'effectue pendant le fonctionnement du metier à tricoter à la pleine vitesse de travail.

7. Procédé suivant l'une des revendications précédentes, **caractérisé** par le fait que l'enregistrement des images de contrôle avec résolution élevée s'effectue à une vitesse de travail réduite du métier à tricoter.

8. Agencement pour le contrôle optique de la qualité des aiguilles de métiers à tricoter, aiguilles qui, en vue de la formation de mailles, sont déplacées d'une position de repos à une position de formation de mailles et inversement, comprenant
au moins une caméra à capteur d'images qui comprend une optique et au moins un capteur d'image et qui est disposée sur le métier à tricoter de manière que l'optique reproduise sur le ou chaque capteur d'images la partie à surveiller de l'aiguille respective amenée hors de sa position de repos,
un dispositif de déclenchement qui déclenche l'enregistrement de l'image de contrôle de la partie d'aiguille à surveiller et la lecture du capteur d'image lorsque l'aiguille atteint une position prédéterminée qui est la même pour toutes les aiguilles,
un convertisseur analogique/numérique raccordé à la sortie du ou de chaque capteur d'image pour convertir les signaux d'image analogiques, fournis par le capteur d'image, en signaux de points d'image numériques,
un circuit de traitement de signaux raccordé à la sortie du convertisseur analogique/numérique et traitant les signaux de points d'image numériques en vue de l'obtention d'informations sur l'état de l'aiguille respective,
la caméra à capteur d'image contenant un capteur d'image à résolution grossière et à fréquence de lecture d'image élevée en vue de la reconnaissance continue de gros défauts tels que ruptures, fissures et déformations des aiguilles, et
la caméra à capteur d'image contenant un capteur d'images à résolution élevée en vue de la détermination occasionnelle de données d'usure et de défauts fins se développant progressivement, tels que fissures fines, et
une unité d'exploitation d'alarme qui, en fonction de signaux d'alarme reçus par le circuit de traitement de signaux en cas de reconnaissance de gros défauts, prend une décision sur l'émission d'un signal d'alarme principal,
le circuit de traitement de signaux contenant une mémoire d'image dans laquelle les signaux de points d'image numériques provenant du capteur d'image à résolution élevée sont mémorisés, et un calculateur d'image étant prévu qui traite les signaux de points d'image mémorisés en vue de la détermination de dimensions géométriques des aiguilles et/ou de caractéristiques de la surface visible des aiguilles.

9. Agencement suivant la revendication 8, **caractérisé** par une source lumineuse stroboscopique qui est déclenchée par le dispositif de déclenchement en synchronisme avec la caméra à capteur d'image et qui est disposée de manière à éclairer l'aiguille dont l'image doit être enregistrée par la caméra à capteur d'image.

10. Agencement suivant la revendication 8 ou 9, **caractérisé** par le fait que la caméra à capteur d'image comprend un diviseur de rayons disposé dans la marche des rayons de l'optique et envoyant l'image de la partie d'aiguilles à surveiller prise par l'optique, d'une part en vue de la reconnaissance en continu de gros défauts tels que ruptures, fissures et déformations des aiguilles, sur le capteur d'image à résolution grossière, avec une fréquence de déclenchement d'image élevée, et d'autre part sur une sortie à laquelle peut être disposé le capteur d'image à résolution élevée en vue de la détermination occasionnelle de données d'usure et de défauts fins se développant progressivement, tels que des fissures fines.

11. Agencement suivant la revendication 8, **caractérisé** par le fait que le circuit de traitement d'image contient au moins une mémoire de référence dans laquelle une image de référence de la partie d'aiguille à surveiller ou des images de référence de différentes zones de contrôle de la partie d'aiguille à surveiller sont mémorisées, ainsi qu'une unité de calcul qui reçoit les signaux de points d'image numériques provenant du capteur d'image à résolution grossière ainsi que les signaux de points d'image numériques de l'image de référence ou des images de référence, lus en synchronisme avec lesdits premiers signaux dans la mémoire de référence, et calcule par comparaison des signaux de points d'image numériques une mesure de ressemblance pour l'image de contrôle ou pour chaque zone de contrôle, et que l'unité de calcul est suivie d'un circuit comparateur à seuils qui compare la ressemblance avec des seuils de tolérance prédéterminés et fournit un signal d'alarme pour chaque degré de ressemblance qui n'atteint pas le seuil de tolérance associe.

12. Agencement suivant la revendication 11, **caractérisé** par une mémoire de seuils de tolérance dans laquelle sont mémorisés les seuils de tolérance individuels associés aux différentes zones de contrôle.

13. Agencement suivant la revendication 11 ou 12, **caractérisé** par le fait que l'unité d'évaluation d'alarme reçoit tous les signaux d'alarme fournis par le circuit de comparaison à seuils et décide, après une pondération prédéterminée des signaux d'alarme, s'il y a lieu d'émettre un signal d'alarme principal.

14. Agencement suivant l'une des revendications 8 à 13, **caractérisé** par le fait que le circuit de traitement de signaux contient plusieurs mémoires de référence dans lesquelles sont mémorisées des images de référence de la partie d'image à surveiller ou des images de référence des zones de contrôle pour différents états de vibration ou déviation de l'aiguille, que toutes les mémoires de référence sont lues simultanément en synchronisme avec les signaux de points d'image numériques fournis par le convertisseur analogique/numérique, que l'unité de calcul compare les signaux de points d'image numériques fournis par les mémoires de référence, en parallèle avec les signaux de points d'image numériques fournis par le convertisseur analogique/numérique et calcule sur la base de chaque comparaison une mesure de ressemblance, et que l'unité de calcul est suivie d'un détecteur de maximum qui ne transmet au circuit de comparaison à seuils, parmi les mesures de ressemblance calculés simultanément, uniquement la mesure de ressemblance indiquant la plus grande ressemblance.

15. Agencement suivant l'une des revendications 11 à 14, **caractérisé** par le fait qu'entre le convertisseur analogique/numérique et l'unité de calcul est intercalé un circuit de sélection de zones qui ne transmet à l'unité de calcul que les signaux de points d'image numériques appartenant à des zones de contrôle prédéterminées de l'image de contrôle.

16. Agencement suivant la revendication 15, **caractérisé** par le fait que le circuit de sélection de zones déclenche la sélection du ou de chaque mémoire de référence en synchronisme avec les signaux de points d'image transmis.
